# EUROPEAN PATENT APPLICATION

(11) **EP 4 730 496 A1**
(43) Date of publication of application: **22.04.2026**
(21) Application number: 25208871.1
(22) Date of filing: 15.10.2025
(51) Int. Cl.: H01M 50/103, H01M 50/169, H01M 50/186, H01M 50/342, H01M 50/553

(54) **SECONDARY BATTERY AND METHOD FOR MANUFACTURING THE SAME**

(30) Priority: 18.10.2024 KR 20240143341
(71) Applicant: SAMSUNG SDI CO., LTD., Yongin-si, Gyeonggi-do 17084 (KR)
(72) Inventor: BAEK, Soomin, 17084 Yongin-Si, Gyeonggi-do (KR); SHIN, Hojun, 17084 Yongin-Si, Gyeonggi-do (KR)
(74) Representative: Gulde & Partner

(57) **Abstract**

A secondary battery includes: an electrode assembly; a case accommodating the electrode assembly; and a vent part in at least one surface of the case, and including: a vent hole penetrating through the case; and a vent plate joined with the vent hole to seal the vent hole. A thickness of the vent plate corresponds to a depth of the vent hole.

## Description

### BACKGROUND

### 1. Field

Aspects of embodiments of the present disclosure relate to a secondary battery, and a method for manufacturing the secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A secondary battery may be exposed to various environments according to a usage status and condition, and thus, there may be risks of explosion due to an internal short circuit, an overcurrent or overvoltage charge state, high temperature exposure, an external shock, and/or the like. A secondary battery may include a vent part as a high pressure relief part for relieving a high pressure, which may be an immediate cause of an explosion.

The above information disclosed in this Background section is for enhancement of understanding of the background of the present disclosure, and therefore, it may contain information that does not constitute related (or prior) art.

### SUMMARY

A secondary battery may include a case configured of a stainless steel material to increase a durability of the secondary battery. However, it may be difficult to process the stainless steel material in a thin film form due to a property of the stainless steel material, and thus, it may be difficult to apply the stainless steel material to a vent part of the secondary battery.

One or more embodiments of the present disclosure may be directed to a secondary battery, and a method for manufacturing the secondary battery.

These and other aspects and features of the present disclosure will be described in or will be apparent from the following description of embodiments of the present disclosure.

According to one or more embodiments of the present disclosure, a secondary battery includes: an electrode assembly; a case accommodating the electrode assembly; and a vent part in at least one surface of the case, and including: a vent hole penetrating through the case; and a vent plate joined with the vent hole to seal the vent hole. A thickness of the vent plate corresponds to a depth of the vent hole.

In an embodiment, the vent plate and the vent hole may be butt-welded to each other to form a welding portion, and the welding portion may be located toward an outer side of the case along a contact portion between the vent plate and the vent hole.

In an embodiment, the thickness of the vent plate may be in a range of 0.2mm to 2.0mm.

In an embodiment, a welding depth of the welding portion may be in a range of 0.1mm to 0.2mm.

In an embodiment, a welding depth of the welding portion may be in a range of 10 % to 30 % of the thickness of the vent plate.

In an embodiment, the welding portion may be laser-etched at the outer side of the case to reduce a welding depth of the welding portion.

In an embodiment, the welding portion may be laser-etched to reduce the welding depth of the welding portion to a range of 5 % to 25 % of the thickness of the vent plate.

In an embodiment, the case and the vent plate may include a stainless steel material.

In an embodiment, the case may include: a main body part accommodating the electrode assembly, and having one opened surface; and a cap plate joined with the one opened surface of the main body part. The vent hole may penetrate the cap plate.

In an embodiment, the case may include: a main body part accommodating the electrode assembly, and having at least one opened surface; and a cap plate joined with the at least one opened surface of the main body part. The vent hole may penetrate the main body part.

According to one or more embodiments of the present disclosure, a method for manufacturing a secondary battery includes: preparing an electrode assembly; preparing a case including a vent part formed in at least one surface; inserting the electrode assembly into the case; and sealing the case. The vent part includes a vent hole penetrating through the case, and a vent plate joined with the vent hole to seal the vent hole. A thickness of the vent plate corresponds to a depth of the vent hole.

In an embodiment, the vent plate and the vent hole may be butt-welded to each other to form a welding portion, and the welding portion may be formed toward an outer side of the case along a contact portion between the vent plate and the vent hole.

In an embodiment, the thickness of the vent plate may be in a range of 0.2mm to 2.0mm.

In an embodiment, a welding depth of the welding portion may be in a range of 0.1mm to 0.2mm.

In an embodiment, a welding depth of the welding portion may be in a range of 10 % to 30 % of the thickness of the vent plate.

In an embodiment, the welding portion may be laser-etched in the outer side of the case to reduce a welding depth of the welding portion.

In an embodiment, the welding portion may be laser-etched to reduce the welding depth of the welding portion to a range of 5 % to 25 % of the thickness of the vent plate.

In an embodiment, the case and the vent plate may include a stainless steel material.

In an embodiment, the case may include: a main body part accommodating the electrode assembly, and having one opened surface; and a cap plate joined with the main body part. The vent hole may be formed in the cap plate, and the sealing may include joining the cap plate with the one opened surface of the main body part.

In an embodiment, the case may include: a main body part accommodating the electrode assembly, and having at least one opened surface; and a cap plate joined with the main body part. The vent hole may be formed in the main body part, and the sealing may include joining the cap plate with the at least one opened surface of the main body part.

According to some embodiments of the present disclosure, a case of a secondary battery may be configured of a stainless steel material to increase a rigidity of the case as compared with a case configured of another material, such as aluminum and/or iron.

According to some embodiments of the present disclosure, the case having a desired strength may be manufactured while reducing a thickness of the case, and thus, an energy efficiency of the secondary battery may be increased, and the case may be prevented or substantially prevented from being melted and damaged by a high temperature gas or byproducts discharged through a vent part.

According to some embodiments of the present disclosure, both the case and a vent plate may be configured of the same material as each other, for example, such as a stainless steel material, and corrosion that may occur in a jointing portion of the case and the vent plate due to a potential difference between dissimilar metals may be prevented or substantially prevented.

According to some embodiments of the present disclosure, both the case and the vent plate may be formed in the same or substantially the same thickness as each other, and a breaking pressure of the vent part may be controlled by a welding depth of a welding portion even when a separate notch configuration is omitted in the vent plate. Accordingly, a manufacturing process of the secondary battery may be simplified, and productivity of the secondary battery may be increased.

According to some embodiments of the present disclosure, after a welding process of the vent plate and a vent hole is completed, a laser etching process may be further performed so that the welding depth of the welding portion may be uniformly or substantially uniformly processed. Further, even after the welding process of the vent plate and the vent hole is completed, a breaking pressure of the vent part may be further controlled.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view illustrating an example of a secondary battery according to some embodiments of the present disclosure.
FIG. 2 is a perspective view illustrating an example of a secondary battery according to some embodiments of the present disclosure.
FIG. 3 is an exploded perspective view illustrating an example of a vent part according to some embodiments of the present disclosure.
FIG. 4 is a plan view illustrating an example of a vent part according to some embodiments of the present disclosure.
FIG. 5 is a cross-sectional view illustrating an example of a vent part according to some embodiments of the present disclosure.
FIG. 6 is an enlarged cross-sectional view illustrating an example of a welding portion according to some embodiments of the present disclosure.
FIG. 7 is a cross-sectional view illustrating an example of a vent part according to some embodiments of the present disclosure.
FIG. 8 is an enlarged cross-sectional view illustrating an example of a welding portion according to some embodiments of the present disclosure.
FIG. 9 is a cross-sectional view illustrating an example of a vent part according to a comparative example.
FIG. 10 is a flowchart illustrating an example of a manufacturing method of a secondary battery according to some embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. In other words, "and/or" includes any or all combinations of a plurality of items enumerated. When "C to D" is stated, it means C or more and D or less, unless otherwise specified.

In the drawings, dimensions, thicknesses, relative dimensions, or relative thicknesses of regions illustrated in the drawings may be exaggerated for convenience of illustration. In other words, the dimensions illustrated in drawings are provided for convenience of illustration, and the present disclosure is not limited thereto. Further, the same reference numerals throughout the specification and drawings designate the same or substantially the same elements.

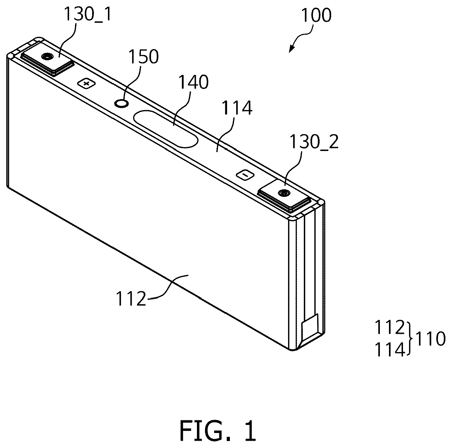

FIG. 1 is a perspective view illustrating an example of a secondary battery 100 according to some embodiments of the present disclosure.

Referring to FIG. 1, the secondary battery 100 may include an electrode assembly, a case 110 in which the electrode assembly is built or accommodated, and a vent part 140 formed in one surface of the case 110.

The electrode assembly may include a first electrode, a second electrode, and a separator. For example, the electrode assembly may be formed such that the first electrode, the second electrode, and the separator interposed between the first and second electrodes are wound together. In another example, the electrode assembly may be formed such that the first electrode and the second electrode, which are configured of a plurality of sheets, with the separator interposed therebetween, are alternately stacked. The first electrode may be a positive electrode, and the second electrode may be a negative electrode, or vice versa.

The first electrode may function as a positive electrode. The first electrode may include a first base material, and a first active material layer disposed on the first base material. For example, the first base material may include (e.g., may be configured of) an aluminum foil, and the first active material layer may include a transition metal oxide.

The second electrode may function as a negative electrode. The second electrode may include a second base material, and a second active material layer disposed on the second base material. For example, the second base material may include (e.g., may be configured of) a copper foil or a nickel foil, and the second active material layer may include graphite.

The separator may serve to allow ions to move between the first electrode and the second electrode, and to prevent the first electrode and the second electrode from being shortcircuited. For example, the separator may include (e.g., may be configured of) a polyethylene film, a polypropylene film, a polyethylene-polypropylene film, and/or the like, but the separator is not limited thereto.

The case 110 may form an overall appearance of the secondary battery 100. For example, the secondary battery 100 may be a prismatic cell. In this example, the case 110 of the secondary battery 100 may have substantially a rectangular parallelepiped shape, but the present disclosure is not limited thereto.

In some embodiments, the case 110 may include a main body part 112 and a cap plate 114. The main body part 112 may have substantially a rectangular parallelepiped shape of which one surface thereof is opened. For example, the main body part 112 may include a bottom surface having substantially a rectangular shape, and a sidewall extending from the bottom surface.

The cap plate 114 may be joined with the main body part 112 to seal the case 110. For example, the cap plate 114 may be joined with one end of the sidewall of the main body part 112 to seal the one opened surface of the main body part 112.

A first electrode terminal 130_1 and a second electrode terminal 130_2 may be joined with the cap plate 114. The first electrode terminal 130_1 and the second electrode terminal 130_2 may pass through (e.g., may penetrate) the cap plate 114 to protrude outwardly. The first electrode terminal 130_1 may be electrically coupled to the first electrode (e.g., a positive electrode), and the second electrode terminal 130_2 may be electrically coupled to the second electrode (e.g., a negative electrode), or vice versa.

In some embodiments, the vent part 140 may be formed in at least one surface of the case 110. As illustrated in FIG. 1, the vent part 140 may be formed in the cap plate 114, but the present disclosure is not limited thereto. The vent part 140 may prevent or substantially prevent an explosion of the secondary battery 100, or may prevent or substantially prevent a chain exothermic reaction of secondary batteries arranged close to (e.g., adjacent to or near) the secondary battery 100.

As an example, the vent part 140 may be opened if (e.g., when) an internal pressure of the secondary battery 100 exceeds a threshold pressure (e.g., a predetermined threshold pressure). The threshold pressure may be different (e.g., may be differently set) according to an application field, a material, a purpose of the secondary battery 100, and the like. In another example, the vent part 140 may be opened if (e.g., when) an internal temperature exceeds a threshold temperature (e.g., a predetermined threshold temperature).

The vent part 140 may serve as a discharge passage of a vent gas generated in the inside of the secondary battery 100. The vent gas may be discharged through the vent part 140 in a direction perpendicular to or substantially perpendicular to the one surface of the case 110, and thus, an effect of the vent gas on a secondary battery close to (e.g., adjacent to or near) the secondary battery 100 may be minimized or reduced.

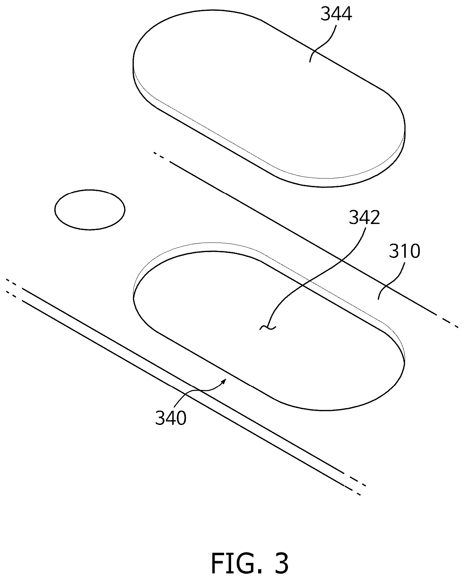

In some embodiments, the vent part 140 may include a vent hole that passes through (e.g., that penetrates) the case 110, and a vent plate that is joined with the vent hole to seal the vent hole. The vent plate closes or fills the vent hole. The vent plate may be joined with the vent hole through welding, and the threshold pressure in which the vent part is opened may be determined based on a welding depth (or a welding strength). In other words, the vent plate may be joined with the material circumventing the vent hole through welding Some examples for the shape of the vent part 140 will be described in more detail below with reference to FIGS. 3 to 8.

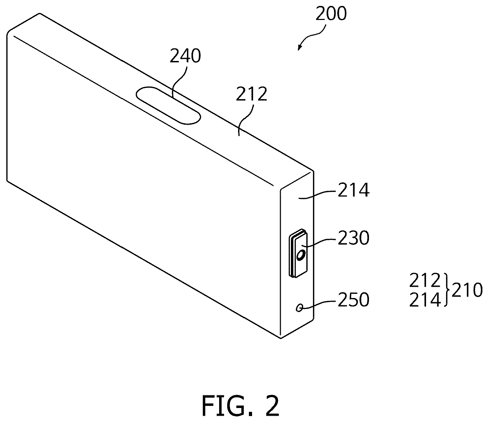

FIG. 1 illustrates that one vent part 140 is formed in the center of the cap plate 114, but the number and the position of the vent part 140 are not limited thereto. For example, one or more vent parts 140 may be formed in one or more positions of the case 110. Some examples for the number and the position of the vent part 140 will be described in more detail below with reference to FIG. 2.

In some embodiments, the case 110 may include (e.g., may be configured of) a stainless steel material. The vent part 140 formed in the one surface of the case 110 may also include (e.g., may also be configured of) a stainless steel material like the case 110. Some examples of the materials for the vent part 140 and the case 110 will be described in more detail below with reference to FIG. 3.

According to some embodiments, the cap plate 114 may include an electrolyte injection port 150. For example, the electrolyte injection port 150 may be a through hole formed in the cap plate 114, and may be formed to inject an electrolyte into the inside of the case 110 after the cap plate 114 is joined with an opening of the case 110 to seal the case 110. The electrolyte injection port 150 may be sealed with a sealing material after injecting the electrolyte.

FIG. 1 illustrates that both the first electrode terminal 130_1 and the second electrode terminal 130_2 are joined with the cap plate 114, but the present disclosure is not limited thereto, and at least one of the first electrode terminal 130_1 or the second electrode terminal 130_2 may be joined with the cap plate 114.

FIG. 1 illustrates that both the vent part 140 and the electrolyte injection port 150 are formed in the cap plate 114, but the present disclosure is not limited thereto. For example, at least one of the vent part 140 or the electrolyte injection port 150 may be formed in the cap plate 114. In another example, the cap plate 114 may be a cap plate itself, or a cover plate in which any one of the vent part 140 or the electrolyte injection port 150 is not formed.

The secondary battery 100 may be a Lithium-ion secondary battery, a sodium secondary battery, and the like, but the present disclosure is not limited thereto. The secondary battery 100 may include any suitable kind of battery that may repeatedly provide electricity through charge and discharge.

FIG. 2 is a perspective view illustrating an example of a secondary battery 200 according to some embodiments of the present disclosure. FIG. 2 is a perspective view illustrating an example of a different kind of secondary battery 200 from the secondary battery (e.g., the secondary battery 100) illustrated in FIG. 1. Hereinafter with reference to FIG. 2, redundant description of the secondary battery 200 that are the same or substantially the same as that described above with FIG. 1 may not be repeated, and the differences may be mainly described in more detail hereinafter.

Referring to FIG. 2, the secondary battery 200 may include an electrode assembly, a case 210 in which the electrode assembly is built or accommodated, and a vent part 240 formed in one surface of the case 210.

The case 210 may include a main body part 212, a first cap plate 214, and a second cap plate (e.g., on an opposite side from that of the first cap plate 214). The main body part 212 may have substantially a rectangular parallelepiped shape, and a first surface and a second surface opposite to the first surface of the main body part 212 may be opened. For example, the main body part 212 may include long sidewall portions facing or opposite to each other, short sidewall portions facing or opposite to each other, an opened first surface, and an opened second surface. The opened first and second surfaces may refer to openings, respectively, and may be spaced apart from each other to be opposite from each other.

The first cap plate 214 and the second cap plate may be joined with the main body part 212 to seal the case 210. For example, the first cap plate 214 may be joined with the opened first surface of the main body part 212, and the second cap plate may be joined with the opened second surface of the main body part 212.

The first cap plate 214 may be joined with a first electrode terminal 230, which is electrically coupled to a first electrode of the electrode assembly. The first electrode terminal 230 may pass through (e.g., may penetrate) the first cap plate 214, and may be joined with the first cap plate 214 to protrude outwardly. Similarly, the second cap plate may be joined with a second electrode terminal, which is electrically coupled to a second electrode of the electrode assembly. The second electrode terminal may pass through (e.g., may penetrate) the second cap plate, and may be joined with the second cap plate to protrude outwardly. An electrolyte injection port 250 may be formed in at least one of the first cap plate 214 or the second cap plate.

In some embodiments, a vent part 240 may be formed in at least one surface of the case 210. As illustrated in FIG. 2, the vent part 240 may be formed in the main body part 212 of the case 210. For example, the vent part 240 may be formed in a top surface of the case 210. The top surface of the case 210 may refer to a surface facing upwardly when the secondary battery 200 is finally installed.

FIGS. 1 and 2 illustrate that the secondary battery is a prismatic cell or a side terminal kind of prismatic cell, but the kind of the secondary battery is not limited thereto. For example, the secondary battery may be any suitable kind of cell, such as a cylindrical kind of cell or a pouch kind of cell. In this case, the vent part may be formed in at least one surface of the case, and a position of the vent part may be suitably modified as needed or desired according to the kind of the case.

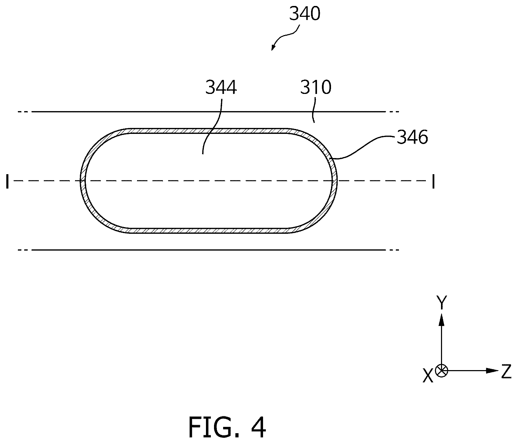

FIG. 3 is an exploded perspective view illustrating an example of a vent part 340 according to some embodiments of the present disclosure. FIG. 4 is a plan view illustrating an example of the vent part 340 according to some embodiments of the present disclosure.

Referring to FIG. 3, the vent part 340 may be formed in at least one surface of a case 310. The vent part 340 may include a vent hole 342 and a vent plate 344.

The vent hole 342 may pass through (e.g., may penetrate) the at least one surface of the case 310. For example, if (e.g., when) the secondary battery is a prismatic secondary battery (e.g., the secondary battery 100 of FIG. 1), the vent hole 342 may be formed in a cap plate (e.g., the cap plate 114 of FIG. 1) of the case 310. In another example, when the secondary battery is a side terminal kind of secondary battery (e.g., the secondary battery 200 of FIG. 2), the vent hole 342 may be formed in a main body part (e.g., the main body part 212 of FIG. 2) of the case 310.

The vent plate 344 may be joined with the vent hole 342 in a state in which the vent plate 344 is inserted into the vent hole 342. Accordingly, the vent hole 342 may be sealed with the vent plate 344.

In some embodiments, the vent plate 344 may have a suitable shape corresponding to the vent hole 342. Accordingly, the vent plate 344 may be inserted into the vent hole 342, and contact portions of the vent plate 344 and the vent hole 342 may be joined with each other so that the vent hole 342 may be sealed with the vent plate 344. FIG. 3 illustrates that the vent hole 342 and the vent plate 344 have substantially an elliptical shape, but the present disclosure is not limited thereto. The vent hole 342 and the vent plate 344 may have any suitable shape, for example, such as a circular shape, a quadrangular shape, a polygonal shape, and the like.

In some embodiments, the case 310 may include (e.g., may be configured of) a stainless steel material. A rigidity of the case 310 including a stainless steel material may be increased as compared with that of a case configured of another material, such as aluminum and/or iron. Accordingly, the case 310 having a desired strength may be manufactured, while reducing a thickness of the case 310, and thus, energy efficiency of the secondary battery may be increased. Further, the case 310 may be prevented or substantially prevented from being melted and damaged by a high temperature gas or byproducts emitted through the vent hole 342.

In some embodiments, the case 310 may include (e.g., may be configured of) the same material as that of the vent plate 344. For example, the vent plate 344 may include (e.g., may be configured of) a stainless steel material, which may be any suitable kind of stainless steel series material, for example, such as SUS304, SUS136, SUS420, SUS430, or the like, within the stainless steel series according to the kind and the ratio of an alloy material. The case 310 and the vent plate 344 may include (e.g., may be configured of) the same material as each other, and thus, corrosion, which may occur due to a potential difference between dissimilar metals at a portion in which the case 310 and the vent plate 344 are joined to each other, may be prevented or substantially prevented.

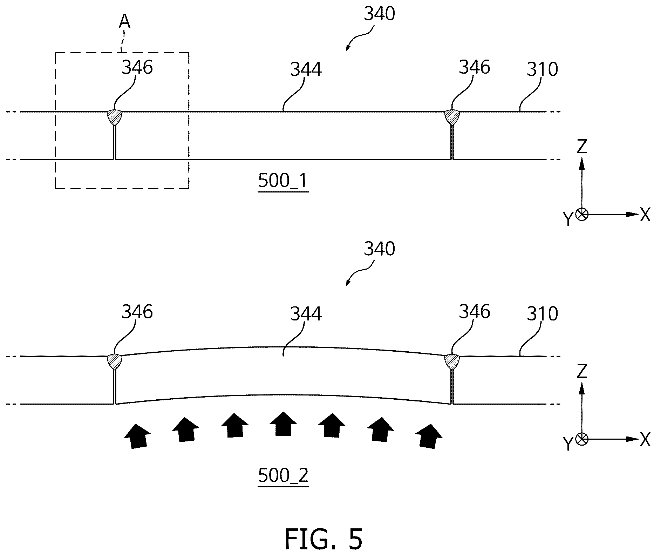

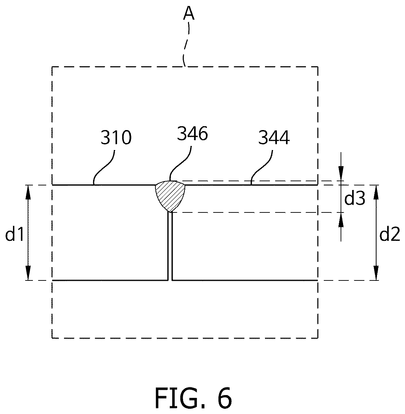

A thickness of the vent plate 344 may correspond to a depth of the vent hole 342. For example, the thickness of the vent plate 344 may correspond to a thickness of one surface of the case 310 in which the vent hole 342 is formed. The thickness of the vent plate 344 may correspond to a thickness of cap plate 114 in which the vent hole 342 is formed. The thickness of the vent plate 344 may correspond to a thickness of a main body part 112 of the case 310 in which the vent hole 342 is formed. Some examples of the thickness of the vent plate 344 will be described in more detail below with reference to FIGS. 5 and 6.

FIG. 4 is a plan view illustrating the vent part 340 in an outer side of the case 310. As illustrated in FIG. 4, the vent plate 344 may be joined with the vent hole of the case 310 in a state in which the vent plate 344 is inserted into the vent hole. The vent plate 344 may be welding-joined with the vent hole.

In some embodiments, the vent plate 344 and the vent hole may be butt-welded to each other. For example, on the basis of the outer surface of the case 310, the vent plate 344 may be inserted into the inside of the vent hole to be coupled to the outer surface of the case 310 without a step therebetween. Then, the vent plate 344 and the vent hole may be butt-welded to each other along a contact portion therebetween. In other words, the vent plate 344 and the material surrounding the vent hole 342 may be butt-welded to each other along a contact portion, the circumferential portion of the vent hole 342.

In some embodiments, the vent plate 344 may be welded to the vent hole in the outer side of the case 310. The outer side of the case 310 is the side of the case facing away from the electrode assembly. Accordingly, the welding portion 346 may be formed toward the outer side of the case 310 along the contact portion between the vent plate 344 and the vent hole.

The welding portion 346 may be designed to be broken if (e.g., when) the internal pressure of the secondary battery is increased. Accordingly, the gas within the inside of the secondary battery may be spouted through the vent hole. The breaking pressure of the secondary battery may be determined based on a welding depth of the welding portion 346. Some examples for determining the welding depth of the welding portion 346 will be described in more detail below with reference to FIGS. 5 and 6.

FIG. 5 is a cross-sectional view illustrating an example of the vent part 340 according to some embodiments of the present disclosure. FIG. 6 is an enlarged cross-sectional view illustrating an example of the welding portion 346 according to some embodiments of the present disclosure.

FIG. 5 is a cross-sectional view of the vent part 340 taken along the line I-I of FIG. 4. Referring to a first example 500_1, the vent plate 344 may be welding-joined with the vent hole, respectively with the material surrounding the vent hole, in a state in which the vent plate 344 is inserted into the vent hole of the case 310. For example, the vent plate 344 and the vent hole may be butt-welded to each other, and the welding portion 346 may be formed toward the outer side of the case 310 along the contact portion between the vent plate 344 and the vent hole, the material surrounding the vent hole, respectively. The vent hole may be sealed by the welding portion 346.

Referring to a second example 500_2, when the vent gas is generated in the inside of the secondary battery, the internal pressure of the secondary battery may be increased, so that the vent plate 344 may be pressurized toward the outer side of the case 310. The welding portion 346 having a relatively low coupling strength may be broken, and the vent hole may be opened. The breaking pressure of the vent part 340 for opening the vent hole may be determined or adapted based on the welding strength of the welding portion 346. The welding strength of the welding portion 346 may be determined or adapted based on the welding depth of the welding portion 346. Accordingly, the welding depth of the welding portion 346 may be determined (e.g., may be set or adapted) based on a target breaking pressure of the secondary battery that is determined in a manufacturing process of the secondary battery.

FIG. 6 is an enlarged cross-sectional view illustrating the region A of FIG. 5. Referring to FIG. 6, a thickness d2 of the vent plate 344 may correspond to a depth of the vent hole. For example, the thickness d2 of the vent plate 344 may correspond to a thickness d1 of the case 310. As used herein, the phrase "correspond to" may mean that the thickness d2 of the vent plate 344 is the same as the thickness d1 of the case 310, or is substantially the same as the thickness d1 of the case 310 within a suitable error range (e.g., a predetermined error range).

The case 310 and the vent plate 344 may include (e.g., may be configured of) a stainless steel material. Due to a property of the stainless steel material, if (e.g., when) the thicknesses d1 and d2 of the case 310 and the vent plate 344 are less than a desired thickness (e.g., a certain or predetermined thickness), the processing of the stainless steel material may be disadvantageous (e.g., may be more difficult), and thus, the productivity of the secondary battery may be degraded. If (e.g., when) the thicknesses d1 and d2 of the case 310 and the vent plate 344 exceed a desired thickness (e.g., a certain or predetermined thickness), the weight of the secondary battery itself may be increased, and thus, the energy efficiency may be degraded. Accordingly, each of the thickness d1 of the case 310 and the thickness d2 of the vent plate 344 may be, for example, in a range of 0.2mm to 2.0 mm, in one embodiment 0.25mm to 1.95mm, but the present disclosure is not limited thereto.

In some embodiments, the welding portion 346 may perform a function of notch for guiding a breaking position of the vent part 340 to the welding portion 346. If (e.g., when) a welding depth d3 of the welding portion 346 is less than a desired thickness (e.g., a certain or predetermined thickness), it may be difficult to uniformly or substantially uniformly form the welding depth of the welding portion 346, and thus, the welding strength and the breaking pressure of the vent part 340 may be non-uniform according to the position of the welding portion 346. If (e.g., when) the welding depth d3 of the welding portion 346 is larger than a desired thickness (e.g., a certain or predetermined thickness), the welding strength of the welding portion 346 may be increased above a target strength, and the welding portion 346 may not perform a notch function. Accordingly, the welding depth d3 of the welding portion 346 may be, for example, in a range of 10 % to 30 % of the thickness d2 of the vent plate 344, in one embodiment 12% to 28% of the thickness d2 of the vent plate 344, but the present disclosure is not limited thereto. Additionally, or as another example, the welding depth d3 of the welding portion 346 may be, for example, in a range of 0.1mm to 0.2mm, or in one embodiment 0.12mm to 0.18mm, but the present disclosure is not limited thereto.

As described above, the vent plate 344 may be formed in the same or substantially the same thickness as that of the case 310, and the breaking pressure of the vent part 340 may be controlled through the welding depth of the welding portion 346, even when a separate notch configuration is omitted in the vent plate 344. Accordingly, a manufacturing process of the secondary battery may be simplified, and the productivity of the secondary battery may be increased.

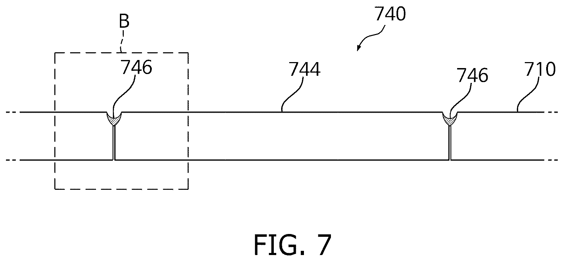

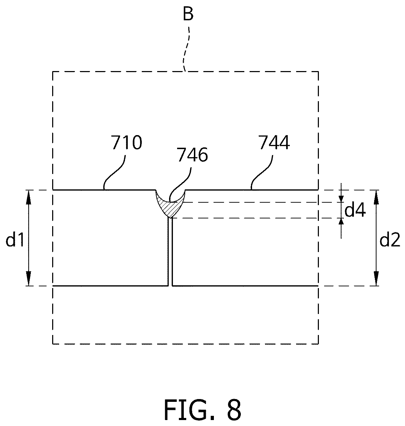

FIG. 7 is a cross-sectional view illustrating an example of a vent part 740 according to some embodiments of the present disclosure. FIG. 8 is an enlarged cross-sectional view illustrating an example of a welding portion 746 according to some embodiments of the present disclosure.

Referring to FIG. 7, the vent part 740 may include a vent hole and a vent plate 744. The vent plate 744 may be welding-joined with the vent hole in a state in which the vent plate 744 is inserted into the vent hole of a case 710, and the welding portion 746 may be formed toward an outer side of the case 710 along a contact portion between the vent hole and the vent plate 744.

In some embodiments, the welding portion 746 may be laser-etched in the outer side of the case 710. A welding bead of the welding portion 746 may be etched, for example, such as in a concave bead form or a flat bead form, and thus, a welding depth of the welding portion 746 may be reduced.

FIG. 8 is an enlarged cross-sectional view illustrating the region B of FIG. 7. Referring to FIG. 8, a thickness d2 of the vent plate 744 may correspond to a depth of the vent hole. For example, the thickness d2 of the vent plate 744 may correspond to a thickness d1 of the case 710. Each of the thickness d1 of the case 710 and the thickness d2 of the vent plate 744 may be, for example, in a range of 0.2mm to 2.0mm, in one embodiment 0.25mm to 1.95mm, in another embodiment 0.5mm to 1.5mm, but the present disclosure is not limited thereto.

The welding depth of the welding portion 746 may be determined based on a target breaking pressure of the vent part 740 of the secondary battery. The welding portion 746 may be laser-etched. As the welding portion 746 is leaser-etched, a welding depth d4 of the welding portion 746 may be reduced. Accordingly, after the welding process of the vent plate 744 and the vent hole to each other is completed, the laser etch process may be further performed to process (e.g., to etch) the welding portion 746, so that the welding depth d4 of the welding portion 746 may be uniform or substantially uniform. The welding depth d4 may be defined as the minimum distance between a lower portion and an above portion of the welding portion 746 is a direction perpendicular to the case. Further, even after the welding process of the vent plate 744 and the vent hole to each other is completed, the breaking pressure of the vent part 740 may be further controlled.

In some embodiments, as the welding portion 746 is laser-etched, the welding depth d4 of the welding portion 746 may be reduced, for example, such as to a range of 5 % to 25 % of the thickness of the vent plate 744, or in one embodiment to 7% to 23% of the thickness of the vent plate 744, or in another embodiment to 10% to 20% of the thickness of the vent plate 744, but the present disclosure is not limited thereto. If (e.g., when) the welding depth d4 of the welding portion 746 is less than a desired thickness (e.g., a certain or predetermined thickness), the coupling strength between the vent plate 744 and the vent hole may be reduced due to the welding portion 746, and thus, the vent hole may be opened due to an external shock and/or the like. Accordingly, the welding depth d4 of the welding portion 746 may be laser-etched, for example, such as in a range of 0.05mm to 0.1mm, or in one embodiment to 0.06mm to 0.09mm, but the present disclosure is not limited thereto.

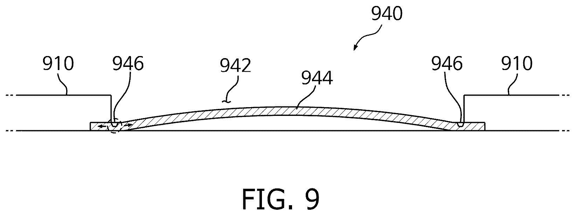

FIG. 9 is a cross-sectional view illustrating an example of a vent part 940 according to a comparative example.

As illustrated in FIG. 9, the vent part 940 may be formed in at least one surface of a case 910 of a secondary battery. The vent part 940 may include a vent hole 942 and a vent plate 944.

The vent hole 942 may pass through (e.g., may penetrate) the case 910. Thus, the vent hole 942 may end on the surfaces of the case 910 where it penetrates through. The vent plate 944 may be welding-joined with the vent hole 942, and the vent hole 942 may be sealed with the vent plate 944.

If (e.g., when) the vent gas is generated in the inside of the secondary battery and the internal pressure of the secondary battery is increased, the vent hole 942 may be opened, and the vent gas may be discharged through the vent hole 942. In order for the vent part 940 to be opened smoothly, a thickness of the vent plate 944 may be designed to be thinner than a thickness of the case 910. For example, to join the vent plate 944 and the case 910 having different thicknesses from each other to each other, the vent plate 944 may be manufactured substantially in a dome shape. In this example, the processing of the vent part 940 may be disadvantageous (e.g., may be more difficult) due to various factors, such as a shape of the vent plate 944, the thicknesses of the vent plate 944 and the case 910 that are different from each other, and the like, and a productivity efficiency of the secondary battery may be degraded.

Further, a groove-shaped notch 946 for guiding a breakage of the vent plate 944 may be formed in at least a partial region of the vent plate 944. However, the processing of the notch 946 may be disadvantageous (e.g., may be more difficult) due to the thinner thickness of the vent plate 944, and thus, a depth of the notch 946 may be non-uniform, and the distribution of the breaking pressure of the vent part 940 may be increased.

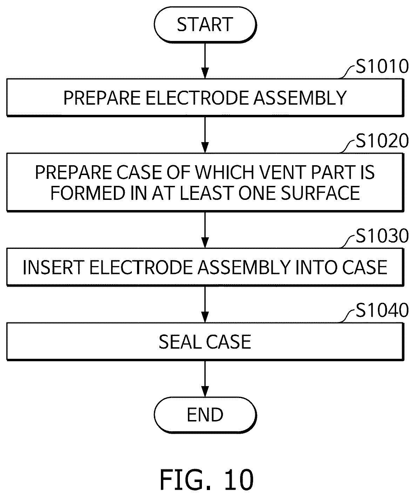

FIG. 10 is a flowchart illustrating an example of a manufacturing method of a secondary battery according to some embodiments of the present disclosure.

The manufacturing method of a secondary battery may start, and an electrode assembly may be prepared (S1010). A case of which a vent part is formed in at least one surface may be prepared (S1020). The vent part may include a vent hole that passes through (e.g., that penetrates) the case, and a vent plate joined with the vent hole to seal the vent hole. The case and the vent plate may include (e.g., may be configured of) a stainless steel material.

In some embodiments, a thickness of the vent plate may correspond to a depth of the vent hole. The thickness of the vent plate may be in a range of 0.2mm to 2.0mm, but the present disclosure is not limited thereto.

In some embodiments, the vent plate and the vent hole may be butt-welded to each other. Accordingly, a welding portion may be formed toward an outer side of the case along a contact portion between the vent plate and the vent hole. A welding depth of the welding portion may be in a range of 0.1mm to 0.2mm, or 0.12mm to 0.18mm, but the present disclosure is not limited thereto. Further, the welding depth of the welding portion may be in a range of 10 % to 30 % of the thickness of the vent plate, in one embodiment 12% to 28% of the thickness d2 of the vent plate 344,but the present disclosure is not limited thereto.

In some embodiments, the welding portion may be laser-etched in the outer side of the case, so that the welding depth of the welding portion may be reduced. For example, as the welding portion is laser-etched, the welding depth of the welding portion may be reduced to a range of 5 % to 25 % of the thickness of the vent plate, or in one embodiment to 7% to 23% of the thickness of the vent plate 744, or in another embodiment to 10% to 20% of the thickness of the vent plate 744, but the present disclosure is not limited thereto.

The electrode assembly may be inserted into the case (S1030). Then the case may be sealed (S1040), and the method may end.

In some embodiments, the case may include a main body part that accommodates the electrode assembly, and one surface thereof may be opened. The case may further include a cap plate joined with the main body part. For example, the vent hole may be formed in the cap plate. The sealing of the case may include joining the cap plate with the one opened surface of the main body part.

In other embodiments, the case may include a main body part that accommodates the electrode assembly, and at least one surface thereof may be opened. The case may further include a cap plate joined with the main body part. For example, the vent hole may be formed in the main body part. The sealing of the case may include joining the cap plate with the one opened surface of the main body part.

The flowchart of FIG. 10 and the description thereof are provided as examples of some embodiments of the present disclosure, and the scope of the present disclosure is not limited to the flowchart of FIG. 10. For example, one or more processes in the flowchart may be added/changed/deleted, the order of one or more processes may be changed, and/or one or more processes may be performed concurrently (e.g., simultaneously or substantially simultaneously) with each other.

Although the present disclosure has been described with reference to embodiments and drawings illustrating aspects thereof, the present disclosure is not limited thereto. Various modifications and variations can be made by a person skilled in the art to which the present disclosure belongs within the scope of the technical spirit of the present disclosure and the claims and their equivalents, below.

### DESCRIPTION OF SOME REFERENCE SYMBOLS

100: secondary battery
110: case
112: main body part
114: cap plate
130_1: first electrode terminal
130_2: second electrode terminal
140: vent part
150: electrolyte injection port

## Claims

1. A secondary battery (100) comprising:
an electrode assembly;
a case (110, 210, 310) accommodating the electrode assembly; and
a vent part (140, 240, 340, 740) in at least one surface of the case (110, 210, 310), and comprising:
a vent hole (342) penetrating through the case (110, 210, 310); and
a vent plate (344, 744) joined with the vent hole (342) to seal the vent hole (342),
wherein a thickness of the vent plate (344, 744) corresponds to a thickness of a surface of the case (310) in which the vent hole (342) is formed.

2. The secondary battery as claimed in claim 1, wherein the vent plate (344, 744) and the vent hole (342) are butt-welded to each other to form a welding portion (346, 746), and
wherein the welding portion (346, 746) is located toward an outer side of the case (110, 210, 310) along a contact portion between the vent plate (344, 744) and the vent hole (342).

3. The secondary battery as claimed in claim 2, wherein the thickness of the vent plate (344, 744) is in a range of 0.2mm to 2.0mm.

4. The secondary battery as claimed in claim 2 or 3, wherein a welding depth of the welding portion (346, 746) is in a range of 0.1mm to 0.2mm.

5. The secondary battery as claimed in claim 2, wherein a welding depth of the welding portion (346, 746) is in a range of 10 % to 30 % of the thickness of the vent plate (344, 744).

6. The secondary battery as claimed in any one of the previous claims, wherein the welding portion (746) is laser-etched at the outer side of the case (710) to reduce a welding depth of the welding portion (746).

7. The secondary battery as claimed in claim 6, wherein the welding portion (746) is laser-etched to reduce the welding depth of the welding portion (746) to a range of 5 % to 25 % of the thickness of the vent plate (744).

8. The secondary battery as claimed in any one of the previous claims, wherein the case (310, 710) and the vent plate (344, 744) comprise a stainless steel material.

9. The secondary battery as claimed in any one of the previous claims, wherein the case (110) comprises:
a main body part (112) accommodating the electrode assembly, and having one opened surface; and
a cap plate (114) joined with the one opened surface of the main body part (112), and
wherein the vent hole (342) penetrates the cap plate (114).

10. The secondary battery as claimed in any one of the previous claims 1 to 8, wherein the case (210) comprises:
a main body part (212) accommodating the electrode assembly, and having at least one opened surface; and
a cap plate (214) joined with the at least one opened surface of the main body part (212), and
wherein the vent hole (342) penetrates the main body part (212).

11. A method for manufacturing a secondary battery, the method comprising:
preparing an electrode assembly;
preparing a case (110, 210, 310) comprising a vent part (140, 240, 340, 740) formed in at least one surface;
inserting the electrode assembly into the case (110, 210, 310); and
sealing the case (110, 210, 310),
wherein the vent part (140, 240, 340, 740) comprises a vent hole (342) penetrating through the case (110, 210, 310), and a vent plate (344, 744) joined with the vent hole (342) to seal the vent hole (342), and
wherein a thickness of the vent plate (344, 744) corresponds to a thickness of a surface of the case (310) in which the vent hole (342) is formed.

12. The method as claimed in claim 11, wherein the vent plate (344, 744) and the vent hole (342) are butt-welded to each other to form a welding portion (346, 746), and
wherein the welding portion (346, 746) is formed toward an outer side of the case (110, 210, 310) along a contact portion between the vent plate (344, 744) and the vent hole (342).

13. The method as claimed in claim 12, wherein the welding portion (746) is laser-etched in the outer side of the case (710) to reduce a welding depth of the welding portion (746).

14. The method as claimed in any one of claims 11 to 13, where the case (110) comprises:
a main body part (112) accommodating the electrode assembly, and having one opened surface; and
a cap plate (114) joined with the main body part (112),
wherein the vent hole (342) is formed in the cap plate (114), and
wherein the sealing comprises joining the cap plate (114) with the one opened surface of the main body part (112).

15. The method as claimed in any one of claims 11 to 13, where the case (210) comprises:
a main body part (212) accommodating the electrode assembly, and having at least one opened surface; and
a cap plate (214) joined with the main body part (212),
wherein the vent hole (342) is formed in the main body part (212), and
wherein the sealing comprises joining the cap plate (214) with the at least one opened surface of the main body part (212).
